# EUROPEAN PATENT APPLICATION

(11) **EP 4 760 851 A1**
(43) Date of publication of application: **17.06.2026**
(21) Application number: 24895512.2
(22) Date of filing: 31.05.2024
(51) Int. Cl.: H01M 10/058

(54) **TAB THREADING DEVICE FOR BATTERY, AND ASSEMBLY APPARATUS AND ASSEMBLY METHOD**

(30) Priority: 30.11.2023 CN 202311643699
(71) Applicant: Contemporary Amperex Technology Co., Limited, Ningde, Fujian 352100 (CN)
(72) Inventor: WU, Kai, Ningde, Fujian 352100 (CN); SUN, Weiwei, Ningde, Fujian 352100 (CN); ZHANG, Yongli, Ningde, Fujian 352100 (CN); TANG, Wenxiang, Ningde, Fujian 352100 (CN); PAN, Wensheng, Ningde, Fujian 352100 (CN); HUANG, Qinkun, Ningde, Fujian 352100 (CN)
(74) Representative: Lorenz Seidler Gossel Part. mbB
(86) International application number: PCT/CN2024/096835
(87) International publication number: WO 2025/112403

(57) **Abstract**

The present application discloses a tab-through device, assembly apparatus (3), and assembly method for a battery. The battery includes a housing and an electrode assembly. The housing is provided with an accommodation chamber, and a through hole is formed in the housing. The electrode assembly is arranged in the accommodation chamber. The tab-through device is configured to guide a tab part of the electrode assembly to extend out of the through hole. The tab-through device includes a guiding member and a support mechanism. The support mechanism is connected to the guiding member. The guiding member is configured to extend into the accommodation chamber and guide the tab part to extend out of the accommodation chamber through the through hole. According to the above method, the present application can effectively reduce the assembly difficulty of the battery.

## Description

The present application claims priority to Chinese Patent Application No. 2023116436999, entitled "TAB-THROUGH DEVICE, ASSEMBLY APPARATUS, AND ASSEMBLY METHOD FOR BATTERY", filed on November 30, 2023, which is incorporated herein by reference in its entirety.

### TECHNICAL FIELD

The present application relates to the technical field of batteries, and in particular, to a tab-through device, assembly apparatus, and assembly method for a battery.

### BACKGROUND

A battery refers to a cup, trough, or other container-or part of the space within a composite container-that contains an electrolyte solution and metal electrodes to generate an electric current; it is a device capable of converting chemical energy into electric energy. With the development of science and technology, batteries-which offer advantages such as ease of carrying, simple and convenient charging/discharging operations, and long-term stable power supply-have been widely applied in fields such as automobiles, household appliances, and aerospace.

The tab part of a battery is a metal conductor that leads the positive electrode and the negative electrode of the battery cell out of the housing; therefore, during the assembly process of the battery, the tab part of the battery needs to be led out of the housing to serve as the contact point for charging and discharging the battery. However, during the assembly process of the battery, when assembling the battery cell into the housing, the tab part is prone to bending inside the housing and cannot be extended out of the housing, which results in a higher difficulty in the battery assembly and manufacturing process and a lower yield rate of finished batteries.

### SUMMARY

The main technical problem to be addressed in the present application is enabling the tab part to smoothly extend out of the housing by providing a tab-through device, assembly apparatus, and assembly method for a battery, thereby effectively reducing the difficulty of battery assembly and effectively enhancing the assembly efficiency of the battery.

In a first aspect, the present application provides a tab-through device for a battery. The battery includes a housing and an electrode assembly; the housing is provided with an accommodation chamber, a through hole that communicates the accommodation chamber with the outside is formed in the housing, the electrode assembly is arranged in the accommodation chamber, and the tab-through device is configured to guide a tab part of the electrode assembly to extend out of the through hole. The tab-through device includes a guiding member and a support mechanism. The guiding member is configured to pass through the through hole, and the support mechanism is connected to the guiding member for fixing a first end of the guiding member. The guiding member is configured to extend into the accommodation chamber and guide the tab part to extend out of the accommodation chamber through the through hole.

According to the above method, through the arrangement of the guiding member that can extend into the accommodation chamber to guide the tab part, it is possible, during the assembly process of the battery, when the housing is sleeved onto the electrode assembly, for the tab part to contact the guiding member. Without affecting or damaging the housing and the tab part, the tab part can be guided smoothly into the through hole, enabling the tab part to smoothly extend out of the housing. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively improving the working stability and reliability of the tab-through device, effectively reducing the assembly difficulty of the battery, and effectively enhancing the assembly efficiency and the yield rate of the battery.

In some embodiments, the support mechanism is configured to drive the guiding member to deflect, such that an extending direction of the guiding member is arranged at an angle with a preset assembly direction, so as to obliquely guide the tab part to extend out of the accommodation chamber through the through hole.

According to the above method, by arranging the extending direction of the guiding member to be at an angle with the preset assembly direction, the guiding member can guide the tab part at a reasonable inclination angle, thereby facilitating relatively gentle guidance for the tab part by the guiding member. As a result, the tab part can be guided to pass through the through hole without causing damage to the tab part. Thus, the tab part is less likely to fail to pass through due to bending or jamming, effectively improving the working stability and reliability of the tab-through device.

In some embodiments, the extending direction of the guiding member is arranged at an angle with an extending direction of the tab part; the extending direction of the tab part is arranged at an angle with the preset assembly direction.

According to the above method, by arranging the extending direction of the guiding member to be at an angle with the extending direction of the tab part, and arranging the extending direction of the tab part to be at an angle with the preset assembly direction, the guidance for the tab part by the guiding member is facilitated, effectively avoiding the bending of or damage to the tab part by collision with the housing, effectively reducing the assembly difficulty of the battery, and effectively enhancing the assembly efficiency and the yield rate of the battery.

In some embodiments, the tab part is provided with a first side surface and a second side surface that are opposite to each other. The tab part is inclined toward a side where the first side surface is located relative to the preset assembly direction; the second end of the guiding member is inclined toward the side where the first side surface is located relative to the first end and contacts the tab part on the side where the first side surface is located.

According to the above method, the tab part can overlap onto the surface of the inclined guiding member. Thus, during the process of inserting the electrode assembly into the housing, the guidance for the tab part by the guiding member is achieved, effectively reducing the assembly difficulty of the battery and effectively enhancing the assembly efficiency and the yield rate of the battery.

In some embodiments, with the tab part as a boundary, the guiding member is configured to extend obliquely from a side where the second side surface is located to the first side surface and contact the tab part on the side where the first side surface of the tab part is located.

According to the above method, by configuring the guiding member to extend obliquely from the side where the second side surface is located to the first side surface, the guiding member can guide the tab part in a relatively gentle manner, effectively avoiding the bending of or damage to the tab part by collision with the guiding member or the housing, effectively reducing the assembly difficulty of the battery, and effectively enhancing the assembly efficiency and the yield rate of the battery.

In some embodiments, the support mechanism includes a base, a flipping drive motor, and a clamping mechanism. The clamping mechanism is arranged on the base, and the flipping drive motor is arranged on the base and is in transmission connection with the clamping mechanism. The clamping mechanism clamps the guiding member, and the flipping drive motor is configured to drive the clamping mechanism to rotate, so as to drive the guiding member to deflect.

According to the above method, by arranging the flipping drive motor to drive the clamping mechanism to rotate so as to drive the guiding member to deflect, the inclination angle of the guiding member is adjusted, and the guiding member is enabled to pass through the through hole at a reasonable inclination angle. As a result, the tab part is guided in a relatively gentle manner, which is beneficial for improving the working reliability of the tab-through device.

In some embodiments, the clamping mechanism includes a rotating base and a clamping block, and the rotating base includes a connecting part, an extending part, and a limiting part. The connecting part and the limiting part are arranged at both ends of the extending part and extend toward a same side of the extending part, with an extending direction of the limiting part and the connecting part being perpendicular to an extending direction of the extending part. The connecting part is rotatably connected to the base, and the clamping block is arranged on the same side of the extending part and located between the connecting part and the limiting part. During the process of sleeving the housing onto the electrode assembly, a portion of the extending part, the clamping block, and the limiting part are arranged opposite to a top part of the housing. In the extending direction of the limiting part and the connecting part, a height of the clamping block is lower than a height of the limiting part. The clamping block is configured to clamp the guiding member.

According to the above method, the clamping block is arranged to fix the guiding member to the clamping mechanism, and the rotating base is arranged to deflect the guiding member. As a result, the guiding member is enabled to guide the tab part in an appropriate inclined position, effectively improving the working stability and reliability of the tab-through device. In addition, by setting the height of the clamping block to be lower than the height of the limiting part in the extending direction of the limiting part and the connecting part, the limiting part is used to limit the length of the guiding member extending into the accommodation chamber. This effectively reduces the possibility of damage to the tab part or the housing due to an excessive length of the guiding member extending into the accommodation chamber, which is beneficial for improving the working reliability and stability of the tab-through device.

In some embodiments, the guiding member is configured in a sheet shape, and one main surface of the guiding member is configured for the tab part to overlap.

According to the above method, through the arrangement of a sheet-shaped guiding member, a smooth main surface is provided for guiding the tab part, which is beneficial for enhancing the guiding efficiency and stability of the guiding member for the tab part, and reducing the assembly difficulty of the battery.

In some embodiments, the support mechanism fixes a first end of the guiding member, such that a second end of the guiding member is suspended.

According to the above method, by fixing the first end of the guiding member via the support mechanism and suspending the second end of the guiding member, the suspended second end can extend into the accommodation chamber as the guiding member is fixed, thereby enabling the guiding of the tab part. This makes the structure simple and effective, which is beneficial for enhancing the guiding efficiency and stability of the guiding member for the tab part, and reducing the assembly difficulty of the battery.

In some embodiments, the process of sleeving the housing onto the electrode assembly includes a first stage. In the first stage, the support mechanism is configured to be capable of moving together with the housing relative to the electrode assembly, and the guiding member is configured to contact the tab part and allow the tab part to slide on the guiding member in the first stage, such that the tab part overlaps onto the guiding member.

According to the above method, the support mechanism moves together with the housing relative to the electrode assembly in the first stage, such that the guiding member extends into the through hole and contacts the tab part, thereby enabling the tab part to overlap onto the guiding member and slide along the guiding member. As a result, the tab part is guided to a position convenient for extending out of the through hole. Thus, the tab part can be guided smoothly and efficiently, thereby effectively enhancing the guiding efficiency of the tab-through device and the assembly efficiency of the battery.

In some embodiments, the process of sleeving the housing onto the electrode assembly includes a second stage following the first stage. In the second stage, the support mechanism is configured to be capable of moving relative to the housing in directions away from each other, such that the guiding member and the housing move away from each other. In the second stage, the guiding member is configured to maintain contact with and remain stationary relative to the tab part, thereby guiding the tab part to extend out of the accommodation chamber through the through hole during the process of the housing moving relatively away.

According to the above method, the support mechanism and the guiding member move relative to the housing in directions away from each other in the second stage, and the guiding member maintains contact with and remains stationary relative to the tab part, such that the tab part can be guided into the through hole as the electrode assembly is further inserted into the housing. This makes the assembly process smooth and clear, effectively enhancing the efficiency of the tab part passing through the through hole and the assembly efficiency of the battery.

In a second aspect, the present application provides an assembly apparatus for a battery. The assembly apparatus includes a housing-insertion device and the tab-through device described above. The housing-insertion device is configured to assemble the electrode assembly into the housing from an open end of the housing. The housing-insertion device includes a housing fixing mechanism and a carrying assembly, the housing fixing mechanism is configured to fix the housing, and the carrying assembly is configured to carry the electrode assembly. The housing fixing mechanism and the tab-through device are capable of moving relative to the carrying assembly, so as to correspond to moving away from or toward the carrying assembly; the guiding member is configured such that the second end thereof is capable of passing through the through hole and extending into the accommodation chamber; the housing fixing mechanism is configured to sleeve the housing onto the electrode assembly; the guiding member is configured to contact the tab part in the accommodation chamber, such that the tab part overlaps onto the guiding member, so as to guide the tab part to pass through the through hole and extend out of the accommodation chamber.

According to the above method, when the housing of the battery is sleeved onto the electrode assembly, the tab part of the battery can be guided smoothly into the through hole. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively improving the working stability and reliability of the tab-through device, effectively reducing the difficulty of battery assembly, and effectively enhancing both the assembly efficiency and the yield rate of the battery.

In some embodiments, the assembly apparatus includes a tab welding device, a post terminal welding device, and a bottom cover welding device. The tab welding device is configured to weld a plurality of tab plates of the electrode assembly to form the tab part; the post terminal welding device is configured to weld the tab part, which passes through the through hole, to one side of a post terminal of the housing that faces away from the accommodation chamber; the bottom cover welding device is configured to weld a bottom cover to the open end of the housing.

According to the above method, the arrangement of the tab welding device, the post terminal welding device, and the bottom cover welding device enables the assembly apparatus to realize the formation of the tab part, the connection between the tab part and the post terminal, and the connection between the bottom cover and the housing. This is beneficial for enhancing the connection stability of each structural part of the battery and improving the working stability and reliability of the battery.

In a third aspect, the present application provides an assembly method for a battery. The battery includes a housing and an electrode assembly; the housing is provided with an accommodation chamber, a through hole that communicates the accommodation chamber with the outside is formed in the housing, the electrode assembly is arranged in the accommodation chamber, and a tab-through device is configured to guide a tab part of the electrode assembly to extend out of the through hole. The assembly method includes: controlling a guiding member to pass through the through hole into the accommodation chamber, and controlling the housing to sleeve onto the electrode assembly; and during a process of sleeving the housing onto the electrode assembly, controlling the guiding member to contact the tab part, such that the tab part overlaps onto the guiding member, so as to guide the tab part to pass through the through hole and extend out of the accommodation chamber.

According to the above method, the tab part of the battery can be smoothly guided to pass through the through hole, such that the tab part is less likely to obstruct the housing from being sleeved onto the electrode assembly, and the tab part is also less likely to be damaged by collision with the housing or to fail to smoothly pass through the through hole. As a result, precise insertion of the electrode assembly into the housing is achieved. Additionally, the tab part is guided to pass through the through hole as the housing is sleeved onto the electrode assembly, thereby effectively improving the working stability and reliability of the tab-through device, effectively reducing the assembly difficulty of the battery, and effectively enhancing the assembly efficiency of the battery.

In some embodiments, controlling the guiding member to contact the tab part, such that the tab part overlaps onto the guiding member, includes: in a first stage, controlling a support mechanism to move together with the housing relative to the electrode assembly, so as to drive the guiding member to contact the tab part in the first stage, such that the tab part overlaps onto the guiding member; and in a second stage, controlling the support mechanism to move relative to the housing in directions away from each other, such that the guiding member and the housing move away from each other, and controlling the support mechanism such that the guiding member maintains contact with and remains stationary relative to the tab part, thereby guiding the tab part to pass through the through hole and extend out of the accommodation chamber during a process of the housing moving relatively away.

According to the above method, in the first stage, the support mechanism moves together with the housing relative to the electrode assembly, such that the guiding member can contact the tab part as the electrode assembly is gradually inserted into the housing. In the second stage, the support mechanism moves relative to the housing in directions away from each other, and the contact between the guiding member and the tab part is maintained, such that the tab part can be guided to pass through the through hole as the electrode assembly is further inserted into the housing. This makes the assembly process smooth and clear, effectively enhancing the efficiency of the tab part passing through the through hole and the assembly efficiency of the battery.

In some embodiments, controlling the guiding member to pass through the through hole into the accommodation chamber, includes: controlling a support mechanism to drive the guiding member to deflect, such that an extending direction of the guiding member is arranged at an angle with the preset assembly direction; and controlling the support mechanism such that the guiding member, when in a deflected state, passes through the through hole into the accommodation chamber.

According to the above method, the guiding member can smoothly pass into the accommodation chamber, while also providing conditions for subsequent guiding of the tab part. The extending direction of the guiding member is arranged at an angle with the preset assembly direction, which can provide a relatively gentle guiding trajectory for the tab part. As a result, the tab part is less prone to bending, deformation, or the like, which is beneficial for improving the assembly reliability and can enhance the efficiency of inserting the electrode assembly into the housing.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a vehicle according to one or more embodiments;
FIG. 2 is a schematic diagram of an exploded structure of a battery according to one or more embodiments;
FIG. 3 is a schematic diagram of an exploded structure of a battery according to one or more embodiments;
FIG. 4 is a schematic structural diagram of an assembly apparatus according to one or more embodiments;
FIG. 5 is a schematic structural diagram of a battery assembly system according to one or more embodiments;
FIG. 6 is a schematic structural diagram of a tab-through device according to one or more embodiments;
FIG. 7 is a schematic diagram of an implementation scenario of the tab-through device shown in FIG. 6;
FIG. 8 is a schematic diagram of another implementation scenario of the tab-through device shown in FIG. 6;
FIG. 9 is a schematic diagram of a cross-sectional structure of the tab-through device shown in FIG. 8 along the section line A-A;
FIG. 10 is a front view of the tab-through device shown in FIG. 6; and
FIG. 11 is a schematic flowchart of an embodiment of an assembly method for a battery according to the present application.

Reference numerals in the detailed description are as follows:
1000a vehicle;
100a power supply battery; 200a controller; 300a motor;
10a case; 11a first portion; 12a second portion;
F1 preset assembly direction; F2 extending direction of the guiding member; F3 extending direction of the tab part; F4 extending direction of the connecting part; F5 extending direction of the extending part;
1 battery; 10 housing; 11 accommodation chamber; 12 open end; 13 top part; 14 through hole; 15 post terminal; 20 electrode assembly; 21 tab part; 211 first side surface; 102 second side surface; 30 bottom cover; 2 tab-through device; 201 first end; 202 second end; 100 guiding member; 200 support mechanism; 210 base; 220 flipping drive motor; 221 first synchronous pulley; 222 second synchronous pulley; 223 synchronous belt; 230 clamping mechanism; 231 rotating base; 232 connecting part; 233 extending part; 234 limiting part; 235 clamping block; 3 assembly apparatus; 40 housing-insertion device; 41 housing fixing mechanism; 42 carrying assembly; 50 tab welding device; 60 post terminal welding device; 70 bottom cover welding device; 80 pairing device; 4 conveying apparatus; 5 battery assembly system.

### DETAILED DESCRIPTION

The technical solutions in the embodiments of the present application will be clearly and completely described hereinafter with reference to the drawings in the embodiments of the present application. It is apparent that the described embodiments are only some, but not all, embodiments of the present application. All other embodiments obtained by those of ordinary skill in the art without creative efforts with respect to the embodiments in the present application shall fall within the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technology, batteries have been applied in an increasing number of fields and are gradually replacing traditional fossil energy in the automotive power sector. A battery can store chemical energy and can controllably convert the chemical energy into electric energy. In rechargeable batteries, after discharge, the active substance can be activated through charging for continued use.

A battery refers to a cup, trough, or other container-or part of the space within a composite container-that contains an electrolyte solution and metal electrodes to generate an electric current; it is a device capable of converting chemical energy into electric energy. With the development of science and technology, batteries-which offer advantages such as ease of carrying, simple and convenient charging/discharging operations, and long-term stable power supply-have been widely applied in fields such as automobiles, household appliances, and aerospace.

The tab part of a battery is a metal conductor that leads the positive electrode and the negative electrode of the battery cell out of the housing; therefore, during the assembly process of the battery, the tab part of the battery needs to be led out of the housing to serve as the contact point for charging and discharging the battery. However, during the assembly process of the battery, when assembling the battery cell into the housing, the tab part is prone to bending inside the housing and cannot be extended out of the housing, making it difficult to smoothly complete the assembly between the battery cell and the housing. As a result, the assembly and manufacturing process of the battery becomes more difficult, and the yield rate of finished batteries becomes lower.

To achieve precise insertion of the electrode assembly into the housing and to smoothly extend the tab part from inside the housing to the outside, the tab part can be guided during the insertion of the electrode assembly into the housing, such that the tab part is smoothly extended from inside the housing to the outside.

Based on the above considerations, the present application provides a tab-through device, assembly apparatus, and assembly method for a battery. The battery includes a housing and an electrode assembly. The housing is provided with an accommodation chamber, and a through hole that communicates the accommodation chamber with the outside is formed in the housing. The electrode assembly is arranged in the accommodation chamber. The tab-through device is configured to guide the tab part of the electrode assembly to extend out of the through hole. The tab-through device includes a guiding member and a support mechanism. The guiding member is configured to pass through the through hole, and the support mechanism is connected to the guiding member for fixing a first end of the guiding member. The guiding member is configured to extend into the accommodation chamber and guide the tab part to extend out of the accommodation chamber through the through hole. In this way, without affecting or damaging the housing, the tab part can be guided smoothly into the through hole, enabling the tab part to smoothly extend out of the housing. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively improving the working stability and reliability of the tab-through device, effectively reducing the assembly difficulty of the battery, and effectively enhancing the assembly efficiency and the yield rate of the battery.

The battery disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000a as an example of the electric device according to an embodiment of the present application.

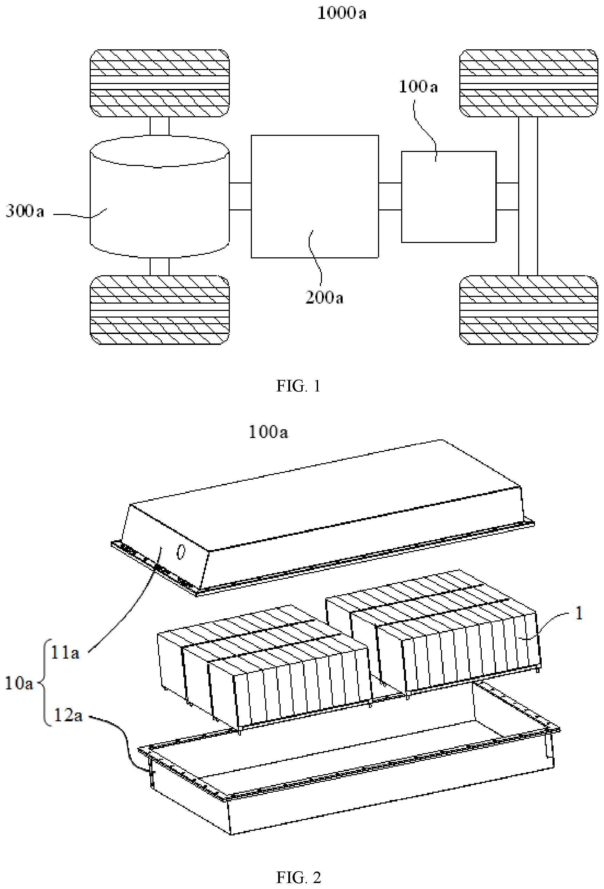

Referring to FIG. 1, a vehicle 1000a may be a fuel vehicle, a gas vehicle, or a new energy vehicle. The new energy vehicle may be a pure electric vehicle, a hybrid vehicle, an extended-range vehicle, or the like. A power supply battery 100a is arranged inside the vehicle 1000a, and the power supply battery 100a may be arranged at the bottom, head, or tail of the vehicle 1000a. The power supply battery 100a may be configured to power the vehicle 1000a. For example, the power supply battery 100a may serve as an operation power source for the vehicle 1000a. The vehicle 1000a may further include a controller 200a and a motor 300a. The controller 200a is configured to control the power supply battery 100a to supply power to the motor 300a, e.g., for the operation power needed by the vehicle 1000a for start-up, navigation, and driving.

In some embodiments of the present application, the power supply battery 100a may not only serve as an operation power source for the vehicle 1000a, but also as a driving power source for the vehicle 1000a, replacing or partially replacing fuel or natural gas, to provide driving power for the vehicle 1000a.

In some embodiments, the power supply battery 100a may be an energy storage device. The energy storage device includes an energy storage container, an energy storage electrical cabinet, and the like.

The power supply battery 100a mentioned in the embodiments of the present application refers to a single physical module including one or a plurality of batteries 1 to provide higher voltage and capacity.

In the embodiments of the present application, the battery 1 may be a secondary battery, which refers to a battery that may be continuously used by activating the active material by charging after the battery discharges. Each battery 1 may also be a primary battery.

The battery 1 includes, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. The battery 1 may be cylindrical, flat, rectangular parallelepiped, or in other shapes.

In some embodiments, the power supply battery 100a may be a battery module, and when a plurality of batteries 1 are provided, the plurality of batteries 1 are arranged and fixed to form one battery module.

In some embodiments, referring to FIG. 2, the power supply battery 100a may be a battery pack. The battery pack includes a case 10a and a battery 1, and the battery 1 or the battery module is accommodated in the case 10a.

In some embodiments, the case 10a may be a portion of the chassis structure of the vehicle 1000a. For example, a portion of the case 10a may become at least a portion of the floor of the vehicle 1000a, or a portion of the case 10a may become at least a portion of a transverse beam and a longitudinal beam of the vehicle 1000a.

Referring to FIG. 2, the power supply battery 100a includes a case 10a and a battery 1, and the battery 1 is accommodated within the case 10a. The case 10a is configured to provide an accommodating space for the battery 1, and the case 10a may be of a variety of structures. In some embodiments, the case 10a may include a first portion 11a and a second portion 12a. The first portion 11a and the second portion 12a are mutually lidded onto each other, and the first portion 11a and the second portion 12a jointly define an accommodating space for accommodating the battery 1. The second portion 12a may be of a hollow structure with one end open, and the first portion 11a may be of a plate-shaped structure. The first portion 11a is lidded onto the open side of the second portion 12a, such that the first portion 11a and the second portion 12a jointly define the accommodating space. The first portion 11a and the second portion 12a may also each be of a hollow structure with one side open, and the open side of the first portion 11a is lidded onto the open side of the second portion 12a. Certainly, the case 10a formed by the first portion 11a and the second portion 12a may be in various shapes, such as cylindrical and rectangular parallelepiped.

In the power supply battery 100a, there may be a plurality of batteries 1, and the plurality of batteries 1 may be connected in series, in parallel, or in series-parallel. The series-parallel connection means that both series connection and parallel connection are present for the connection among the plurality of batteries 1. The plurality of batteries 1 may be directly connected in series, in parallel, or in series-parallel, and then the whole formed by the plurality of batteries 1 is accommodated in the case 10a. Certainly, the situation may also be that in the power supply battery 100a, a plurality of batteries 1 are first connected in series, in parallel, or in series-parallel to form battery modules, and then the plurality of battery modules are connected in series, in parallel, or in series-parallel to form a whole and accommodated in the case 10a. The power supply battery 100a may further include other structures. For example, the power supply battery 100a may further include a busbar component for achieving the electrical connection among the plurality of batteries 1.

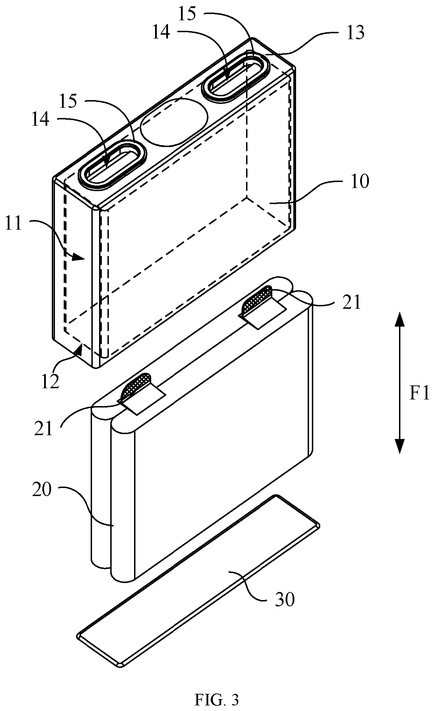

Referring to FIG. 3, the battery 1 refers to the smallest unit constituting the battery. As shown in FIG. 3, the battery 1 includes a housing 10, an electrode assembly 20, and other functional components.

In some embodiments, the housing 10 is configured to encapsulate the electrode assembly 20, the electrolyte, and other components. The housing 10 may be a steel housing, an aluminum housing, a plastic housing (such as polypropylene), a composite metal housing (such as a copper-aluminum composite housing), an aluminum-plastic film, or the like.

The battery 1 may include a bottom cover 30. The bottom cover 30 refers to a component that is lidded onto the opening of the housing 10 to isolate the internal environment of the battery 1 from the external environment. Without limitation, the shape of the bottom cover 30 may be adapted to the shape of the housing 10 to match the housing 10. Optionally, the bottom cover 30 may be made of a material with a certain hardness and strength (for example, an aluminum alloy), such that the bottom cover 30 is not easily deformed when being squeezed or collided. This enables the battery 1 to have higher structural strength, and the safety performance can also be improved. The bottom cover 30 may also be made of various materials, for example, including but not limited to copper, iron, aluminum, stainless steel, aluminum alloy, and plastic. In some embodiments, an insulating component may also be provided on the inner side of the bottom cover 30, and the insulating component may be configured to isolate an electrical connection component in the housing 10 from the bottom cover 30 to reduce the risk of a short circuit. Illustratively, the insulating component may be made of plastic, rubber, or the like.

The housing 10 is an assembly configured in conjunction with the bottom cover 30 to form the internal environment of the battery 1. The formed internal environment can be used to accommodate the electrode assembly 20, the electrolytic solution, and other components. The housing 10 and the bottom cover 30 may be independent components. An open end 12 may be formed in the housing 10, and the bottom cover 30 is lidded onto the open end 12 to form the internal environment of the battery 1. Without limitation, the bottom cover 30 and the housing 10 may be integrated. Specifically, the bottom cover 30 and the housing 10 may form a common connection surface before other components are placed in the housing, and when the interior of the housing 10 needs to be encapsulated, the bottom cover 30 is lidded onto the housing 10. The housing 10 may be in various shapes and sizes, such as a rectangular parallelepiped, a cylinder, and a hexagonal prism. Specifically, the shape of the housing 10 may be determined according to the specific shape and size of the electrode assembly 20. The housing 10 may be made of various materials, for example, including but not limited to copper, iron, aluminum, stainless steel, aluminum alloy, and plastic. Functional components, such as electrode terminals, may be arranged on the housing 10. The electrode terminals may be configured to electrically connect with the electrode assembly 20 for outputting or inputting electric energy of the battery 1. In some embodiments, the housing 10 may also be provided with a pressure relief mechanism for releasing the internal pressure when the internal pressure or temperature of the battery 1 reaches a threshold.

The electrode assembly 20 is a component where the electrochemical reaction occurs in the battery 1. One or more electrode assemblies 20 may be accommodated in the housing 10.

In some embodiments, the electrode assembly 20 includes a positive electrode, a negative electrode, and a separator. During the charging and discharging process of the battery, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in a thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO4 (also referred to as LFP)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO2), a lithium nickel oxide (such as LiNiO2), a lithium manganese oxide (such as LiMnO2 or LiMn2O4), a lithium nickel cobalt oxide, a lithium manganese cobalt oxide, a lithium nickel manganese oxide, a lithium nickel cobalt manganese oxide (such as LiNi1/3Co1/3Mn1/3O2 (also referred to as NCM333), LiNi0.5Co0.2Mn0.3O2 (also referred to as NCM523), LiNi0.5Co0.25Mn0.25O2 (also referred to NCM211), LiNi0.6Co0.2Mn0.2O2 (also referred to as NCM622), LiNi0.8Co0.1Mn0.1O2 (also referred to NCM811)), a lithium nickel cobalt aluminum oxide (such as LiNi0.85Co0.15Al0.05O2), and modified compounds thereof.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector has two surfaces opposite to each other in a thickness direction thereof, and the negative electrode active material is disposed on either or both of the two opposite surfaces of the negative electrode current collector.

As an example, the negative electrode active material may be a negative electrode active material known in the art for use in batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly 20 further includes a separator disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, nonwoven fabric, polyethylene, polypropylene, polyvinylidene difluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery 1 further includes an electrolyte that serves to conduct ions between the positive electrode and the negative electrode. The present application has no specific limitations on the type of the electrolyte, which can be selected according to needs. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly 20 is of a wound structure. The positive electrode plate and the negative electrode plate are wound to form a wound structure.

In some embodiments, the electrode assembly 20 is provided with a tab part 21, and the tab part 21 can conduct current out from the electrode assembly 20. The tab part 21 includes a positive electrode tab and a negative electrode tab. The positive electrode tab and the negative electrode tab may be located together at one end of the main body part or separately at two ends of the main body part. During the charging and discharging process of the power supply battery 100a, the positive electrode active substance and the negative electrode active substance react with the electrolytic solution, and the tab part 21 is connected to the electrode terminal to form a current circuit.

According to some embodiments of the present application, as shown in FIG. 3, the battery 1 may include a housing 10 and an electrode assembly 20. The housing 10 is provided with an accommodation chamber 11, and an open end 12 that communicates with the accommodation chamber 11 is formed in the housing 10. The housing 10 is further provided with a top part 13 arranged opposite to the open end 12, and through holes 14 that communicate the accommodation chamber 11 with the outside are formed in the top part 13. One end of the electrode assembly 20 may be provided with tab parts 21. The housing 10 is configured to sleeve the electrode assembly 20 through the open end 12 in a preset assembly direction F1, such that the electrode assembly 20 is accommodated within the accommodation chamber 11, and the tab parts 21 extend out of the accommodation chamber 11 through the through holes 14.

Optionally, as shown in FIG. 3, the housing 10 may include post terminals 15. The post terminal 15 may be arranged on the top part 13 of the housing 10, and the through hole 14 may be formed in the post terminal 15. The active substance-coated part of the electrode assembly 20 is arranged within the housing 10, and the tab part 21 of the electrode assembly 20 may pass through the through hole 14 to connect to one side of the post terminal 15 facing away from the accommodation chamber 11, thereby outputting electric energy from the electrode assembly 20 to the outside of the battery 1. The housing 10 may accommodate the electrode assembly 20 by sleeving the electrode assembly 20 through the open end 12.

Optionally, as shown in FIG. 3, the battery 1 may further include a bottom cover 30. The bottom cover 30 is configured to cover the open end 12, such that the electrode assembly 20 is not prone to falling out from the open end 12 after being inserted into the housing.

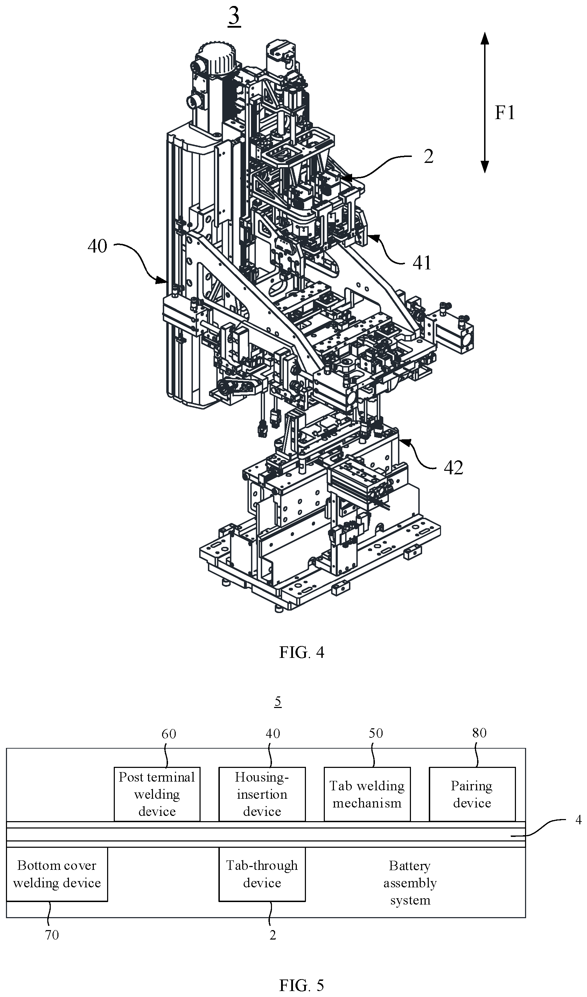

According to some embodiments of the present application, optionally, as shown in FIG. 4, the assembly apparatus 3 includes a housing-insertion device 40 and a tab-through device 2. The housing-insertion device 40 is configured to assemble the electrode assembly 20 into the housing 10 from the open end 12 of the housing 10. The housing-insertion device 40 includes a housing fixing mechanism 41 and a carrying assembly 42. The housing fixing mechanism 41 is configured to fix the housing 10, and the carrying assembly 42, in the preset assembly direction F1, is located below the housing fixing mechanism 41 and the tab-through device 2, and is configured to carry the electrode assembly 20.

Optionally, the electrode assembly 20 and the bottom cover 30 may be sequentially stacked on the carrying assembly 42 according to the preset assembly direction F1, such that after the electrode assembly 20 is inserted into the housing, the bottom cover 30 can cover the open end 12. The carrying assembly 42 may also further fix the electrode assembly 20 and the bottom cover 30 to reduce the occurrence of displacement of the electrode assembly 20 during transportation or the housing insertion process.

The housing fixing mechanism 41 and the tab-through device 2 are configured to be capable of moving relative to the carrying assembly 42 along the preset assembly direction F1, so as to correspond to moving away from or toward the carrying assembly 42. The tab-through device 2 includes a guiding member 100 configured to contact and guide the tab part 21. A first end 201 of the guiding member 100 is configured to be connected to the tab-through device 2, and a second end 202 of the guiding member 100 is configured to pass through the through hole 14 to guide the tab part 21. Specifically, before contacting the tab part 21, the guiding member 100 is configured such that the second end 202 thereof is capable of passing through the through hole 14 and extending into the accommodation chamber 11, and the housing fixing mechanism 41 sleeves the housing 10 onto the electrode assembly 20 during the downward movement. During the process of sleeving the housing 10 onto the electrode assembly 20, the guiding member 100 contacts the tab part 21 in the accommodation chamber 11, such that the tab part 21 overlaps onto the guiding member 100, so as to guide the tab part 21 to pass through the through hole 14.

Furthermore, the process of sleeving the housing 10 onto the electrode assembly 20 includes a first stage and a second stage arranged in sequential order. In the first stage, the housing fixing mechanism 41 and the tab-through device 2 are configured to be capable of moving down together relative to the carrying assembly 42 along a preset assembly direction F1, such that the tab-through device 2 can contact the tab part 21 within the accommodation chamber 11. In the second stage, the housing fixing mechanism 41 is configured to be capable of moving down relative to the tab-through device 2 in the preset assembly direction F1, such that the tab-through device 2 guides the tab part 21 to pass through the through hole 14. Prior to the first stage, the tab-through device 2 is configured to be capable of moving down relative to the housing fixing mechanism 41 along the preset assembly direction F1, such that the tab-through device passes through the through hole 14 from the side of the top part 13 into the accommodation chamber 11, and, during the first stage, moves down together with the housing fixing mechanism 41 relative to the carrying assembly 42.

According to the above method, when the housing 10 of the battery 1 is sleeved onto the electrode assembly 20, the tab part 21 of the battery 1 can be guided smoothly into the through hole 14. As a result, the tab part 21 is less likely to obstruct the housing 10 from being sleeved onto the electrode assembly 20, and the tab part 21 is also less likely to be damaged by collision with the housing 10 or to fail to smoothly pass through the through hole 14. Thus, precise insertion of the electrode assembly 20 into the housing is achieved, effectively improving the working stability and reliability of the tab-through device 2, effectively reducing the assembly difficulty of the battery 1, and effectively enhancing the assembly efficiency and the yield rate of the battery 1.

Optionally, as shown in FIG. 5, in some embodiments, the assembly apparatus 3 includes a tab welding device 50, a post terminal welding device 60, and a bottom cover welding device 70. The tab welding device 50 is configured to weld a plurality of tab plates of the electrode assembly 20 to form the tab part 21; the post terminal welding device 60 is configured to weld the tab part 21, which passes through the through hole 14, to one side of the post terminal 15 of the housing 10 that faces away from the accommodation chamber 11; and the bottom cover welding device 70 is configured to weld the bottom cover 30 to the open end 12 of the housing 10.

According to the above method, the arrangement of the tab welding device 50, the post terminal welding device 60, and the bottom cover welding device 70 enables the assembly apparatus 3 to realize the formation of the tab part 21, the connection between the tab part 21 and the post terminal 15, and the connection between the bottom cover 30 and the housing 10. This is beneficial for enhancing the connection stability of each structural part of the battery 1 and improving the working stability and reliability of the battery 1.

It should be noted that, in this embodiment, structures to be assembled can be conveyed by the conveying apparatus 4 among the stations of the assembly apparatus 3. The conveying apparatus 4 and the assembly apparatus 3 together form the battery assembly system 5. The conveying apparatus 4 includes a conveyor line, which may be a conveying structure formed by conveyor rollers driven by a motor together with a conveyor belt, a conveying structure formed by conveyor chain links driven by a motor and hinged together, or an AGV conveying cart. This conveyor line can realize conveying in at least one direction and can support and ensure the stability of the structure to be assembled.

The purpose of the tab welding device 50 is to enable the formation of the tab part 21 after the pre-welding of the tab plates. The tab welding device may optionally be an ultrasonic welding apparatus, which can ensure that the tab plates are welded under a stable clamped state. The purpose of the post terminal welding device 60 is to realize the welding between the tab part 21 and the pole terminal 15. The post terminal welding device may optionally be a laser welding apparatus. The purpose of the bottom cover welding device 70 is to realize circumferential edge welding of the bottom cover 30 and the open end 12 of the housing 10. The bottom cover welding device is also a laser welding apparatus.

In addition, the assembly apparatus 3 is not limited to including the tab welding device 50, the housing-insertion device 40, the tab-through device 2, the post terminal welding device 60, and the bottom cover welding device 70. Illustratively, when there are a plurality of electrode assemblies 20, for example, when there are two electrode assemblies, the assembly apparatus 3 further includes a pairing device 80. The pairing device 80 is configured to arrange the plurality of electrode assemblies 20 in a stacking manner, such that the tab plates of the two electrode assemblies 20 are approximately opposite. This facilitates the conveying structure in conveying the paired electrode assemblies 20 to the tab welding device 50 for welding of the tab plates, thus facilitating the formation of the tab part 21. Further illustratively, to ensure reliability in the battery assembly process, dust removal stations, NG detection stations, etc., may be added between any two adjacent stations, which is not limited in this embodiment.

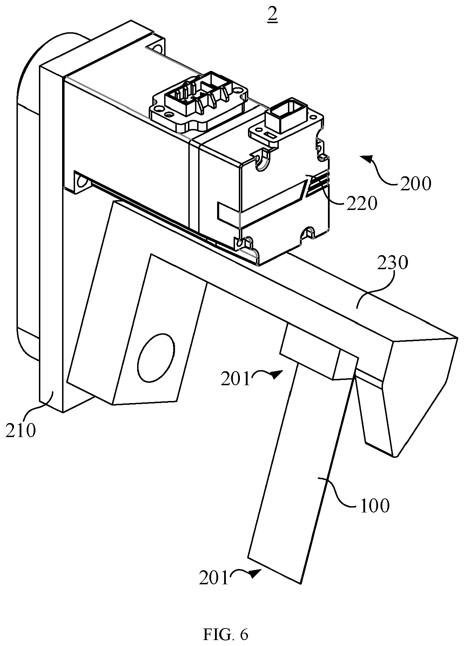

According to some embodiments of the present application, as shown in FIG. 6, the tab-through device 2 includes a guiding member 100 and a support mechanism 200. The guiding member 100 is configured to pass through the through hole 14. The support mechanism 200 is connected to the guiding member 100 for fixing the first end 201 of the guiding member 100.

Before contacting the tab part 21, the guiding member 100 is configured such that the second end 202 thereof is capable of passing through the through hole 14 and extending into the accommodation chamber 11. During the process of sleeving the housing 10 onto the electrode assembly 20, the guiding member 100 is configured to extend into the accommodation chamber 11 and contact the tab part 21, such that the tab part 21 overlaps onto the guiding member 100, so as to guide the tab part 21 to extend out of the accommodation chamber 11 through the through hole 14.

According to the above method, through the arrangement of the guiding member 100 that can extend into the accommodation chamber 11 to guide the tab part 21, it is possible, during the assembly process of the battery 1, when the housing 10 is sleeved onto the electrode assembly 20 through the open end 12 along the preset assembly direction F1, for the tab part 21 to overlap onto the guiding member 100. Without affecting or damaging the housing 10 and the tab part 21, the tab part 21 can be guided smoothly into the through hole 14, enabling the tab part 21 to smoothly extend out of the housing 10. As a result, the tab part 21 is less likely to obstruct the housing 10 from being sleeved onto the electrode assembly 20, and the tab part 21 is also less likely to be damaged by collision with the housing 10 or to fail to smoothly pass through the through hole 14. Thus, precise insertion of the electrode assembly 20 into the housing is achieved, effectively improving the working stability and reliability of the tab-through device 2, effectively reducing the assembly difficulty of the battery 1, and effectively enhancing the assembly efficiency and the yield rate of the battery 1.

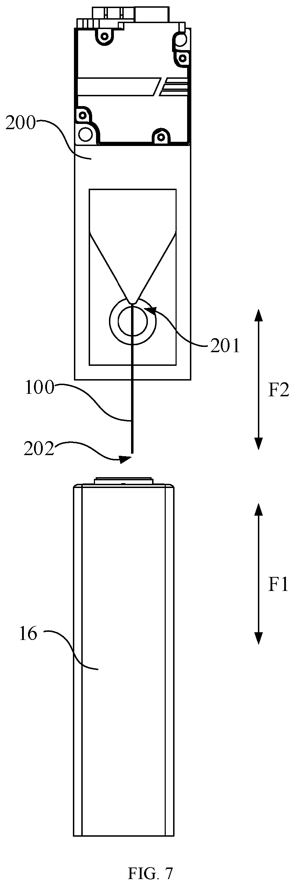

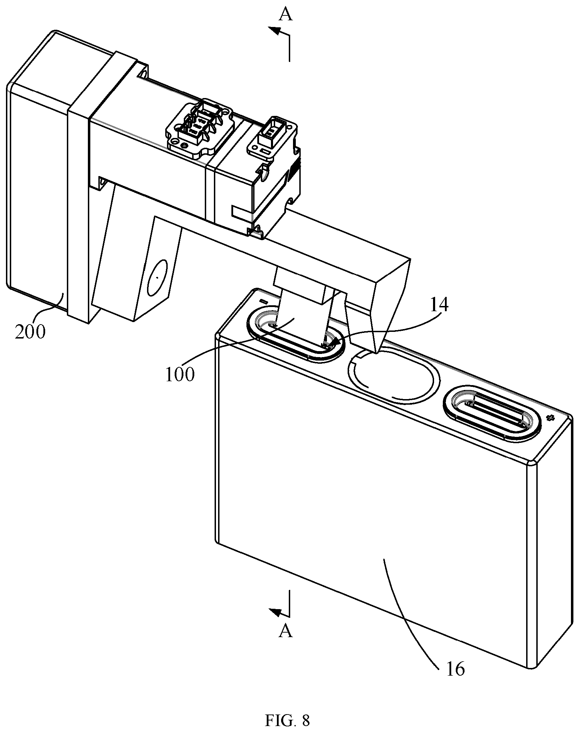

According to some embodiments of the present application, optionally, as shown in FIGs. 7 to 9, the support mechanism 200 is configured to drive the guiding member 100 to deflect, such that the extending direction F2 of the guiding member 100 is arranged at an angle with the preset assembly direction F1, so as to obliquely guide the tab part 21 to pass through the through hole 14.

Optionally, before the guiding member 100 enters the through hole 14, the extending direction F2 thereof may be consistent with the preset assembly direction F1, and when the guiding member 100 is required to enter the through hole 14 to guide the tab part 21, the support mechanism 200 drives the guiding member 100 to deflect, so as to enable the extending direction F2 thereof to be arranged at an angle with the preset assembly direction F1.

By arranging the extending direction F2 of the guiding member 100 to be at an angle with the preset assembly direction F1, the guiding member 100 is enabled to guide the tab part 21 at a reasonable inclination angle, thereby facilitating relatively gentle guidance for the tab part 21 by the guiding member 100. In addition, the inclined guiding member 100 can achieve a staggered arrangement with the tab part 21 when entering the through hole 14, reducing the possibility of collision and damage between the tab part 21 and the guiding member 100. As a result, the tab part 21 can be guided into the through hole 14 without causing damage to the tab part 21. Thus, the tab part 21 is less likely to fail to pass through due to bending or jamming, effectively improving the working stability and reliability of the tab-through device 2.

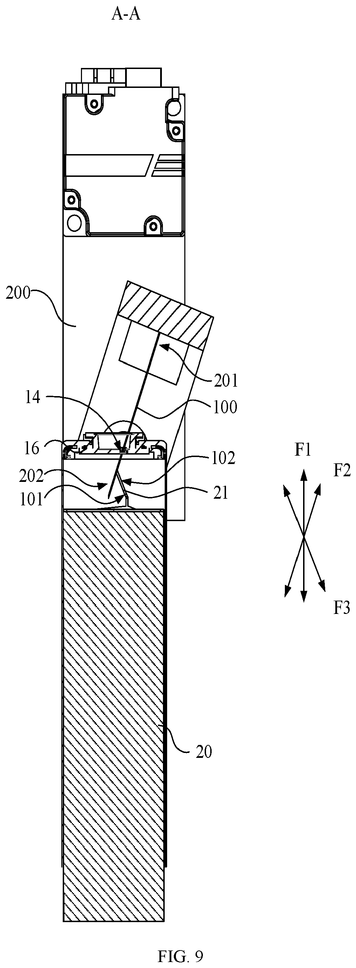

According to some embodiments of the present application, optionally, as shown in FIG. 9, the extending direction F2 of the guiding member 100 is arranged at an angle with the extending direction F3 of the tab part 21, and the extending direction F3 of the tab part 21 is arranged at an angle with the preset assembly direction F1.

By arranging the extending direction F2 of the guiding member 100 to be at an angle with the extending direction F3 of the tab part 21, and arranging the extending direction F3 of the tab part 21 to be at an angle with the preset assembly direction F1, the guidance for the tab part 21 by the guiding member 100 is facilitated, effectively avoiding the bending of or damage to the tab part 21 by collision with the housing 10, effectively reducing the assembly difficulty of the battery 1, and effectively enhancing the assembly efficiency and the yield rate of the battery 1.

According to some embodiments of the present application, optionally, as shown in FIG. 9, the tab part 21 is provided with a first side surface 101 and a second side surface 102 that are opposite to each other. The tab part 21 is inclined toward a side where the first side surface 101 is located relative to the preset assembly direction F1. The second end 202 of the guiding member 100 is inclined toward a side where the first side surface 101 is located relative to the first end 201 and contacts the tab part 21 on the side where the first side surface 101 is located.

The tab part 21 is inclined toward the side where the first side surface 101 is located relative to the preset assembly direction F1. By configuring the second end 202 of the guiding member 100 to be inclined toward the side where the first side surface 101 is located relative to the first end 201, the guiding member 100 and the tab part 21 are arranged in a staggered manner. As a result, the tab part 21 can overlap onto the surface of the inclined guiding member 100. Thus, during the process of inserting the electrode assembly 20 into the housing, the guidance for the tab part 21 by the guiding member 100 is achieved, effectively reducing the assembly difficulty of the battery 1, and effectively enhancing the assembly efficiency and the yield rate of the battery 1.

According to some embodiments of the present application, optionally, as shown in FIG. 9, with the tab part 21 as a boundary, the guiding member 100 is configured to extend obliquely from a side where the second side surface 102 is located to the first side surface 101 and contact the tab part 21 on the side where the first side surface 101 of the tab part 21 is located.

By configuring the guiding member 100 to extend obliquely from the side where the second side surface 102 is located to the first side surface 101, the inclination angle of the guiding member 100 relative to the tab part 21 is relatively slight. As a result, the tab part 21 is guided in a relatively gentle manner, and the tab part 21 can overlap onto the guiding member 100 smoothly, thereby effectively avoiding the bending of or damage to the tab part 21 by collision with the guiding member 100 or the housing 10, effectively reducing the assembly difficulty of the battery 1, and effectively enhancing the assembly efficiency and the yield rate of the battery 1.

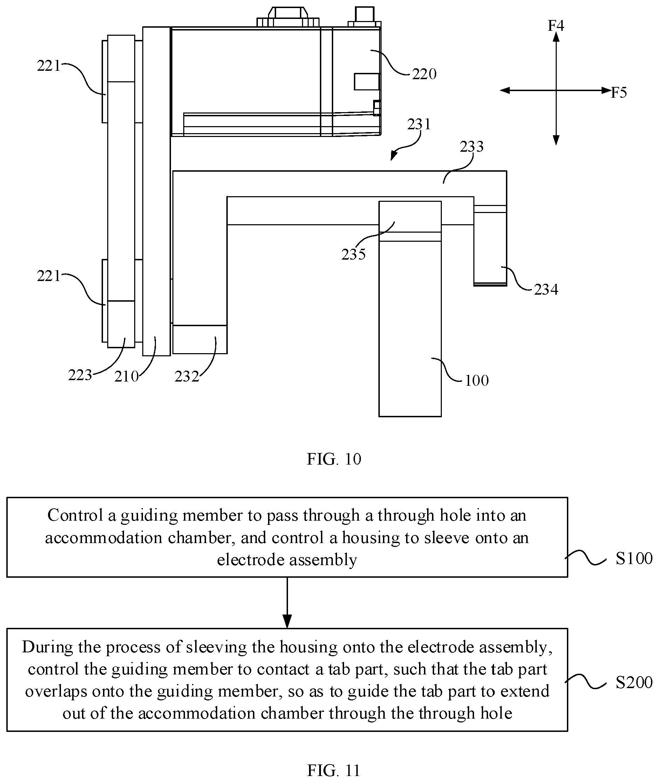

According to some embodiments of the present application, optionally, as shown in FIG. 10, the support mechanism 200 includes a base 210, a flipping drive motor 220, and a clamping mechanism 230. The clamping mechanism 230 is arranged on the base 210. The flipping drive motor 220 is arranged on the base 210 and is in transmission connection with the clamping mechanism 230. The clamping mechanism 230 clamps the guiding member 100, and the flipping drive motor 220 is configured to drive the clamping mechanism 230 to rotate, so as to drive the guiding member 100 to deflect.

Optionally, the support mechanism 200 may include a first synchronous pulley 221, a second synchronous pulley 222, and a synchronous belt 223. The first synchronous pulley 221 is driven by the flipping drive motor 220 to rotate, such that the first synchronous pulley 221 drives, through the synchronous belt 223, the second synchronous pulley 222 to rotate. As a result, the clamping mechanism 230 rotates under the drive of the second synchronous pulley 222.

According to the above method, by arranging the flipping drive motor 220 to drive the clamping mechanism 230 to rotate so as to drive the guiding member 100 to deflect, the inclination angle of the guiding member 100 is adjusted, and the guiding member 100 is enabled to pass through the through hole 14 at a reasonable inclination angle. As a result, the tab part 21 can be guided in a relatively gentle manner, which is beneficial for improving the working reliability of the tab-through device 2.

According to some embodiments of the present application, optionally, as shown in FIG. 10, the clamping mechanism 230 includes a rotating base 231 and a clamping block 235. The rotating base 231 includes a connecting part 232, an extending part 233, and a limiting part 234. The connecting part 232 and the limiting part 234 are arranged at both ends of the extending part 233 and extend toward the same side of the extending part 233. The extending direction F4 of the limiting part 234 and the connecting part 232 is perpendicular to the extending direction F5 of the extending part 233. The connecting part 232 is rotatably connected to the base 210, and the clamping block 235 is arranged on the same side of the extending part 233 and located between the connecting part 232 and the limiting part 234. During the process of sleeving the housing 10 onto the electrode assembly 20, a portion of the extending part 233, the clamping block 235, and the limiting part 234 are arranged opposite to the top part 13 of the housing 10. In the extending direction F4 of the limiting part 234 and the connecting part 232, the height of the clamping block 235 is lower than the height of the limiting part 234. The clamping block 235 is configured to clamp the guiding member 100.

According to the above method, the clamping block 235 is arranged to fix the guiding member 100 to the clamping mechanism 230, and the rotating base 231 is arranged to deflect the guiding member 100. As a result, the guiding member 100 is enabled to guide the tab part 21 in an appropriate inclined position, effectively improving the working stability and reliability of the tab-through device 2. In addition, by setting the height of the clamping block 235 to be lower than the height of the limiting part 234 in the extending direction F4 of the limiting part 234 and the connecting part 232, the limiting part 234 is used to limit the length of the guiding member 100 extending into the accommodation chamber 11. This effectively reduces the possibility of damage to the tab part 21 or the housing 10 due to an excessive length of the guiding member 100 extending into the accommodation chamber 11, which is beneficial for improving the working reliability and stability of the tab-through device 2.

According to some embodiments of the present application, optionally, as shown in FIG. 9, the guiding member 100 is configured in a sheet shape, and one main surface of the guiding member 100 is configured for the tab part 21 to overlap.

According to the above method, through the arrangement of a sheet-shaped guiding member 100, a smooth main surface is provided for guiding the tab part 21, which is beneficial for enhancing the guiding efficiency and stability of the guiding member 100 for the tab part 21, and reducing the assembly difficulty of the battery 1.

According to some embodiments of the present application, optionally, as shown in FIG. 6, the support mechanism 200 fixes the first end 201 of the guiding member 100, such that the second end 202 of the guiding member 100 is suspended.

According to the above method, by fixing the first end 201 of the guiding member 100 via the support mechanism 200 and suspending the second end 202 of the guiding member 100, the suspended second end 202 can extend into the accommodation chamber 11 as the guiding member 100 is fixed, thereby enabling the guiding of the tab part 21. This makes the structure simple and effective, which is beneficial for enhancing the guiding efficiency and stability of the guiding member 100 for the tab part 21, and reducing the assembly difficulty of the battery 1.

According to some embodiments of the present application, optionally, as shown in FIGs. 7 to 9, the process of sleeving the housing 10 onto the electrode assembly 20 includes a first stage. In the first stage, the support mechanism 200 is configured to be capable of moving together with the housing 10 relative to the electrode assembly 20, and the guiding member 100 is configured to contact the tab part 21 and allow the tab part 21 to slide on the guiding member 100 in the first stage, such that the tab part 21 overlaps onto the guiding member 100.

In the first stage, the support mechanism 200 moves together with the housing 10 relative to the electrode assembly 20, such that the guiding member 100 extends into the through hole 14 and contacts the tab part 21, thereby enabling the tab part 21 to overlap onto the guiding member 100 and slide along the guiding member 100. As a result, the tab part 21 is guided to a position convenient for extending out of the through hole 14. Thus, the tab part 21 can be guided smoothly and efficiently, thereby effectively enhancing the guiding efficiency of the tab-through device 2 and the assembly efficiency of the battery 1.

According to some embodiments of the present application, optionally, as shown in FIG. 9, the process of sleeving the housing 10 onto the electrode assembly 20 includes a second stage following the first stage. In the second stage, the support mechanism 200 is configured to be capable of moving relative to the housing 10 in directions away from each other, such that the guiding member 100 and the housing 10 move away from each other. In the second stage, the guiding member 100 is configured to maintain contact with and remain stationary relative to the tab part 21, thereby guiding the tab part 21 to pass through the through hole 14 during the process of the housing 10 moving relatively away.

According to the above method, the support mechanism 200 and the guiding member 100 move relative to the housing 10 in directions away from each other in the second stage, and the guiding member 100 maintains contact with and remains stationary relative to the tab part 21, such that the tab part 21 can be guided to pass through the through hole 14 as the electrode assembly 20 is further inserted into the housing. This makes the assembly process smooth and clear, effectively enhancing the efficiency of the tab part 21 passing through the through hole 14 and the assembly efficiency of the battery 1.

According to some embodiments of the present application, as shown in FIG. 11, the assembly method for the battery 1 according to the present application may include the following steps.

In S100, a guiding member is controlled to pass through a through hole into an accommodation chamber, and a housing is controlled to sleeve onto an electrode assembly.

The support mechanism 200 is controlled to drive the guiding member 100 to deflect, such that the extending direction F2 of the guiding member 100 is arranged at an angle with the preset assembly direction F1, thereby controlling the support mechanism 200 to allow the guiding member 100 to pass through the through hole 14 into the accommodation chamber 11 when in a deflected state. Afterward, the guiding member 100 and the housing 10 are controlled to move down along the preset assembly direction F1 to approach the electrode assembly 20, such that the tab part 21 smoothly overlaps onto the guiding member 100, and the housing 10 is gradually sleeved onto the electrode assembly 20.

According to the above method, the guiding member 100 can smoothly pass into the accommodation chamber 11, while also providing conditions for subsequent guiding of the tab part 21. The extending direction F2 of the guiding member 100 is arranged at an angle with the preset assembly direction F1, which can provide a relatively gentle guiding trajectory for the tab part 21. As a result, the tab part 21 is less prone to bending, deformation, or the like, which is beneficial for improving the assembly reliability and can enhance the efficiency of inserting the electrode assembly 20 into the housing.

In S200, during the process of sleeving the housing onto the electrode assembly, the guiding member is controlled to contact a tab part, such that the tab part overlaps onto the guiding member, so as to guide the tab part to extend out of the accommodation chamber through the through hole.

The process of sleeving the housing 10 onto the electrode assembly 20 includes a first stage and a second stage arranged in sequential order. In the first stage, the support mechanism 200 is controlled to move together with the housing 10 relative to the electrode assembly 20, so as to drive the guiding member 100 to contact the tab part 21 in the first stage, such that the tab part 21 overlaps onto the guiding member 100. In the second stage, the support mechanism 200 is controlled to move relative to the housing 10 in directions away from each other, such that the guiding member 100 and the housing 10 move away from each other. Additionally, the support mechanism 200 is controlled such that the guiding member 100 maintains contact with and remains stationary relative to the tab part 21, thereby guiding the tab part 21 to pass through the through hole 14 during the process of the housing 10 moving relatively away.

In the first stage, the support mechanism 200 moves together with the housing 10 relative to the electrode assembly 20, such that the guiding member 100 can contact the tab part 21 as the electrode assembly 20 is gradually inserted into the housing. In the second stage, the support mechanism 200 moves relative to the housing 10 in directions away from each other, and the contact between the guiding member 100 and the tab part 21 is maintained, such that the tab part 21 can be guided to pass through the through hole 14 as the electrode assembly 20 is further inserted into the housing. This makes the assembly process smooth and clear, effectively enhancing the efficiency of the tab part 21 passing through the through hole 14 and the assembly efficiency of the battery 1. Moreover, the tab part 21 is smoothly guided to pass through the through hole 14, such that the tab part 21 is less likely to obstruct the housing 10 from being sleeved onto the electrode assembly 20, and the tab part 21 is also less likely to be damaged by collision with the housing 10 or fail to smoothly pass through the through hole 14. Thus, precise insertion of the electrode assembly 20 into the housing is achieved, and the tab part 21 is guided to pass through the through hole 14 as the housing 10 is sleeved onto the electrode assembly 20, thereby effectively improving the working stability and reliability of the tab-through device 2, effectively reducing the assembly difficulty of the battery 1, and effectively enhancing the assembly efficiency of the battery 1.

According to some embodiments of the present application, optionally, as shown in FIGs. 3 to 10, the battery 1 includes a housing 10 and an electrode assembly 20. The housing 10 is provided with an accommodation chamber 11, and through holes 14 that communicate the accommodation chamber 11 with the outside are formed in the housing 10. The electrode assembly 20 is arranged in the accommodation chamber 11. The tab-through device 2 is configured to guide tab parts 21 of the electrode assembly 20 to extend out of the through holes 14. The tab-through device 2 includes a guiding member 100 and a support mechanism 200. The guiding member 100 is configured to pass through the through hole 14, and the support mechanism 200 is connected to the guiding member 100 for fixing a first end 201 of the guiding member 100. The guiding member 100 is configured to extend into the accommodation chamber 11 and guide the tab part 21 to extend out of the accommodation chamber 11 through the through hole 14. The support mechanism 200 is configured to drive the guiding member 100 to deflect, such that the extending direction F2 of the guiding member 100 is arranged at an angle with a preset assembly direction F1, so as to obliquely guide the tab part 21 to extend out of the accommodation chamber 11 through the through hole 14. The extending direction F2 of the guiding member 100 is arranged at an angle with the extending direction F3 of the tab part 21, and the extending direction F3 of the tab part 21 is arranged at an angle with the preset assembly direction F1. The tab part 21 is provided with a first side surface 101 and a second side surface 102 that are opposite to each other. The tab part 21 is inclined toward a side where the first side surface 101 is located relative to the preset assembly direction F1. A second end 202 of the guiding member 100 is inclined toward a side where the first side surface 101 is located relative to a first end 201 and contacts the tab part 21 on the side where the first side surface 101 is located. With the tab part 21 as a boundary, the guiding member 100 is configured to extend obliquely from a side where the second side surface 102 is located to the first side surface 101 and contact the tab part 21 on the side where the first side surface 101 of the tab part 21 is located. The support mechanism 200 includes a base 210, a flipping drive motor 220, and a clamping mechanism 230. The clamping mechanism 230 is arranged on the base 210. The flipping drive motor 220 is arranged on the base 210 and is in transmission connection with the clamping mechanism 230. The clamping mechanism 230 clamps the guiding member 100, and the flipping drive motor 220 is configured to drive the clamping mechanism 230 to rotate, so as to drive the guiding member 100 to deflect. The clamping mechanism 230 includes a rotating base 231 and a clamping block 235. The rotating base 231 includes a connecting part 232, an extending part 233, and a limiting part 234. The connecting part 232 and the limiting part 234 are arranged at both ends of the extending part 233 and extend toward the same side of the extending part 233. The extending direction F4 of the limiting part 234 and the connecting part 232 is perpendicular to the extending direction F5 of the extending part 233. The connecting part 232 is rotatably connected to the base 210, and the clamping block 235 is arranged on the same side of the extending part 233 and located between the connecting part 232 and the limiting part 234. During the process of sleeving the housing 10 onto the electrode assembly 20, a portion of the extending part 233, the clamping block 235, and the limiting part 234 are arranged opposite to the top part 13 of the housing 10. In the extending direction F4 of the limiting part 234 and the connecting part 232, the height of the clamping block 235 is lower than the height of the limiting part 234. The clamping block 235 is configured to clamp the guiding member 100. The guiding member 100 is configured in a sheet shape, and one main surface of the guiding member 100 is configured for the tab part 21 to overlap. The support mechanism 200 fixes the first end 201 of the guiding member 100, such that the second end 202 of the guiding member 100 is suspended. The process of sleeving the housing 10 onto the electrode assembly 20 includes a first stage. In the first stage, the support mechanism 200 is configured to be capable of moving together with the housing 10 relative to the electrode assembly 20, and the guiding member 100 is configured to contact the tab part 21 and allow the tab part 21 to slide on the guiding member 100 in the first stage, such that the tab part 21 overlaps onto the guiding member 100. The process of sleeving the housing 10 onto the electrode assembly 20 includes a second stage following the first stage. In the second stage, the support mechanism 200 is configured to be capable of moving relative to the housing 10 in directions away from each other, such that the guiding member 100 and the housing 10 move away from each other. In the second stage, the guiding member 100 is configured to maintain contact with and remain stationary relative to the tab part 21, thereby guiding the tab part 21 to extend out of the accommodation chamber 11 through the through hole 14 during the process of the housing 10 moving relatively away.

According to some embodiments of the present application, as shown in FIG. 4, the assembly apparatus 3 includes the tab-through device 2 described above. Such an arrangement allows the tab part 21 to smoothly extend out of the housing 10, thereby effectively reducing the assembly difficulty of the battery 1 and effectively improving the assembly efficiency of the battery 1.

In summary, the embodiments of the present application can enable the tab part 21 to smoothly extend out of the housing 10, thereby effectively reducing the assembly difficulty of the battery 1 and effectively improving the assembly efficiency of the battery 1.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A tab-through device for a battery , wherein the battery comprises a housing and an electrode assembly, wherein the housing is provided with an accommodation chamber, a through hole that communicates the accommodation chamber with the outside is formed in the housing (10), the electrode assembly is arranged in the accommodation chamber , and the tab-through device is configured to guide a tab part of the electrode assembly to extend out of the through hole; and the tab-through device comprises:
a guiding member configured to pass through the through hole; and
a support mechanism connected to the guiding member for fixing a first end of the guiding member ;
wherein the guiding member is configured to extend into the accommodation chamber and guide the tab part to extend out of the accommodation chamber through the through hole.

2. The tab-through device according to claim 1, wherein
the support mechanism is configured to drive the guiding member to deflect, such that an extending direction of the guiding member is arranged at an angle with the preset assembly direction, so as to obliquely guide the tab part to extend out of the accommodation chamber through the through hole.

3. The tab-through device according to claim 2, wherein
the extending direction of the guiding member is arranged at an angle with an extending direction of the tab part ; the extending direction of the tab part is arranged at an angle with the preset assembly direction .

4. The tab-through device according to claim 3, wherein
the tab part is provided with a first side surface and a second side surface that are opposite to each other, wherein the tab part is inclined toward a side where the first side surface is located relative to the preset assembly direction; the second end of the guiding member is inclined toward the side where the first side surface is located relative to the first end and contacts the tab part on the side where the first side surface is located.

5. The tab-through device according to claim 4, wherein
with the tab part as a boundary, the guiding member is configured to extend obliquely from a side where the second side surface is located to the first side surface and contact the tab part on the side where the first side surface of the tab part is located.

6. The tab-through device according to claim 2, wherein
the support mechanism comprises a base, a flipping drive motor, and a clamping mechanism, wherein the clamping mechanism is arranged on the base, and the flipping drive motor is arranged on the base and is in transmission connection with the clamping mechanism; the clamping mechanism clamps the guiding member , and the flipping drive motor is configured to drive the clamping mechanism to rotate, so as to drive the guiding member to deflect.

7. The tab-through device according to claim 6, wherein
the clamping mechanism comprises a rotating base and a clamping block, and the rotating base comprises a connecting part, an extending part , and a limiting part, wherein the connecting part and the limiting part are arranged at both ends of the extending part and extend toward a same side of the extending part , with an extending direction of the limiting part and the connecting part being perpendicular to an extending direction of the extending part; the connecting part is rotatably connected to the base, and the clamping block ,, is arranged on the same side of the extending part and located between the connecting part and the limiting part; during a process of sleeving the housing onto the electrode assembly, a portion of the extending part, the clamping block, and the limiting part are arranged opposite to a top part of the housing ; in the extending direction of the limiting part and the connecting part, a height of the clamping block is lower than a height of the limiting part ; the clamping block is configured to clamp the guiding member.

8. The tab-through device according to any one of claims 1 to 7, wherein
the guiding member is configured in a sheet shape, and one main surface of the guiding member is configured for the tab part to overlap.

9. The tab-through device according to any one of claims 1 to 7, wherein
the support mechanism fixes the first end of the guiding member, such that the second end of the guiding member is suspended.

10. The tab-through device according to any one of claims 1 to 7, wherein
the process of sleeving the housing onto the electrode assembly comprises a first stage; in the first stage, the support mechanism is configured to be capable of moving together with the housing relative to the electrode assembly ; the guiding member is configured to contact the tab part and allow the tab part to slide on the guiding member in the first stage, such that the tab part overlaps onto the guiding member..

11. The tab-through device according to claim 10, wherein
the process of sleeving the housing onto the electrode assembly comprises a second stage following the first stage; in the second stage, the support mechanism is configured to be capable of moving relative to the housing in directions away from each other, such that the guiding member and the housing move away from each other; in the second stage, the guiding member is configured to maintain contact with and remain stationary relative to the tab part , thereby guiding the tab part to extend out of the accommodation chamber through the through hole during a process of the housing moving relatively away.

12. An assembly apparatus for a battery, comprising:
a housing-insertion device and the tab-through device according to any one of claims 1 to 11, wherein the housing-insertion device is configured to assemble the electrode assembly into the housing from an open end of the housing; the housing-insertion device comprises a housing fixing mechanism and a carrying assembly, the housing fixing mechanism is configured to fix the housing, and the carrying assembly is configured to carry the electrode assembly;
wherein the housing fixing mechanism and the tab-through device are capable of moving relative to the carrying assembly , so as to correspond to moving away from or toward the carrying assembly; the guiding member is configured such that the second end thereof is capable of passing through the through hole and extending into the accommodation chamber; the housing fixing mechanism is configured to sleeve the housing onto the electrode assembly; the guiding member is configured to contact the tab part in the accommodation chamber , such that the tab part overlaps onto the guiding member , so as to guide the tab part to pass through the through hole and extend out of the accommodation chamber .

13. The assembly apparatus according to claim 12, wherein
the assembly apparatus comprises a tab welding device , a post terminal welding device, and a bottom cover welding device, wherein the tab welding device is configured to weld a plurality of tab plates of the electrode assembly to form the tab part;; the post terminal welding device is configured to weld the tab part, which passes through the through hole, to one side of a post terminal of the housing that faces away from the accommodation chamber; the bottom cover welding device is configured to weld a bottom cover to the open end of the housing .

14. An assembly method for a battery, wherein the battery comprises a housing and an electrode assembly , wherein the housing is provided with an accommodation chamber , a through hole that communicates the accommodation chamber with the outside is formed in the housing , the electrode assembly is arranged in the accommodation chamber , and the tab-through device is configured to guide a tab part of the electrode assembly to extend out of the through hole ; and the assembly method comprises:
controlling the guiding member to pass through the through hole into the accommodation chamber, and controlling the housing to sleeve onto the electrode assembly; and
during a process of sleeving the housing onto the electrode assembly, controlling the guiding member to contact the tab part, such that the tab part overlaps onto the guiding member, so as to guide the tab part to pass through the through hole and extend out of the accommodation chamber.

15. The assembly method according to claim 14, wherein
controlling the guiding member to contact the tab part, such that the tab part overlaps onto the guiding member, comprises:
in a first stage, controlling a support mechanism to move together with the housing relative to the electrode assembly, so as to drive the guiding member to contact the tab part in the first stage, such that the tab part overlaps onto the guiding member; and
in a second stage, controlling the support mechanism to move relative to the housing in directions away from each other, such that the guiding member and the housing move away from each other, and controlling the support mechanism such that the guiding member maintains contact with and remains stationary relative to the tab part, thereby guiding the tab part to pass through the through hole and extend out of the accommodation chamber during a process of the housing moving relatively away.

16. The assembly method according to claim 14, wherein
controlling the guiding member to pass through the through hole into the accommodation chamber, comprises:
controlling a support mechanism to drive the guiding member to deflect, such that an extending direction of the guiding member is arranged at an angle with the preset assembly direction ; and
controlling the support mechanism such that the guiding member , when in a deflected state, passes through the through hole into the accommodation chamber.
